# EUROPEAN PATENT SPECIFICATION

(11) **EP 3 007 492 B1**
(45) Date of publication and mention of the grant of the patent: **28.06.2017**
(21) Application number: 14807972.6
(22) Date of filing: 14.05.2014
(51) Int. Cl.: H04W 8/08, H04W 40/02, H04W 80/04, H04W 36/12

(54) **ROUTE OPTIMIZING METHOD AND APPARATUS, AND COMPUTER STORAGE MEDIUM**
ROUTENOPTIMIERUNGSVERFAHREN UND -VORRICHTUNG UND COMPUTERSPEICHERMEDIUM
APPAREIL ET PROCÉDÉ D'OPTIMISATION DE ROUTE ET SUPPORT D'INFORMATIONS INFORMATIQUE

(30) Priority: 04.06.2013 CN 201310218902
(43) Date of publication of application: 13.04.2016
(73) Proprietor: ZTE Corporation, Shenzhen, Guangdong 518057 (CN)
(72) Inventor: CUI, Yong, Shenzhen Guangdong 518057 (CN); XU, Xin, Shenzhen Guangdong 518057 (CN); WANG, Wendong, Shenzhen Guangdong 518057 (CN); LIU, Guoyan, Shenzhen Guangdong 518057 (CN); SHEN, Min, Shenzhen Guangdong 518057 (CN); ZHU, Chunhui, Shenzhen Guangdong 518057 (CN); ZHOU, Na, Shenzhen Guangdong 518057 (CN)
(74) Representative: Lavoix
(86) International application number: PCT/CN2014/077503
(87) International publication number: WO 2014/194747

(56) References cited:
- EP-A1- 2 375 796
- CN-A- 101 136 847
- CN-A- 101 179 457
- CN-A- 101 940 014
- US-A1- 2009 094 693
- KRISHNAN ERICSSON R KOODLI CISCO SYSTEMS P LOUREIRO NEC Q WU HUAWEI A DUTTA NIKSUN S: "Localized Routing for Proxy Mobile IPv6; rfc6705.txt", LOCALIZED ROUTING FOR PROXY MOBILE IPV6; RFC6705.TXT, INTERNET ENGINEERING TASK FORCE, IETF; STANDARD, INTERNET SOCIETY (ISOC) 4, RUE DES FALAISES CH- 1205 GENEVA, SWITZERLAND, 20 September 2012 (2012-09-20), pages 1-20, XP015086436, [retrieved on 2012-09-20]

## Description

### TECHNICAL FIELD

The disclosure relates to the field of communication, and in particular to a route optimization method, apparatus and non-transitory computer-readable storage medium.

### BACKGROUND

In August 2005, an InternetEngineeringTaskForce (IETF) extablished a Network-based Localized Mobility Management (NETLMM) work group, and proposed ProxyMobilelPv6 (PMIPv6) protocol technology. The technology provided a solution for a problem of requiring a change of a mobile node network protocol stack in a host-side Mobility supporting protocol. In the PMIPv6, a Local Mobility Anchor (LMA) and a mobile access gateway (MAG) are introduced. A a Local Mobile Anchor may play a role identical to that of a mobile IPv6 home proxy. A mobile access gateway may perform, representing a mobile node, signaling interaction with a Local Mobile Anchor, Therefore, with the PMIPv6, any Mobility Management work may be handed to a network side, and a mobile node may move around, without the need of any modification, in a network without awareness of the move. Based on such advantages, the proxy mobile IP technology has become one of the most popular technologies in the field of mobile IP at present.

In field related to PMIPv6 local route optimization, in November 2012, IETF NETEXT work group released RFC 6705, ProxyMobilelPv6 local route optimization*.* In the draft, three route optimization solutions in different single-access scenes in a PMIPv6 domain, namely, a local route optimization solution A11, a local route optimization solution A21, and a local route optimization solution A12, are proposed. The three solutions will be introduced respectively below with reference to accompanying drawings.

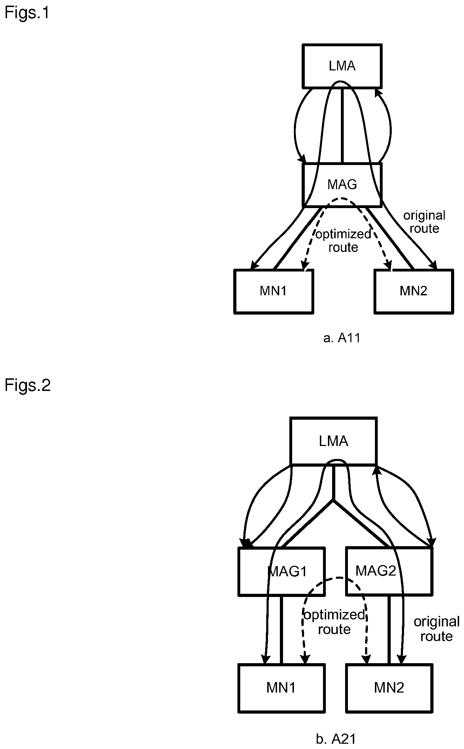

Fig.1 is a diagram of an existing route optimization solution according to the access scene A11. As shown in Fig.1, both single-interface parties in mobile communication in the scene, Mobile Node (MN) 1 and MN2, access a same MAG and a same LMA. After receiving data sent by the two MNs, the LMA may trigger local route optimization, adjusting a data transmission path from MN1<->MAG <->LMA <->MAG <->MN2 to MN1<->MAG <->MN2.

Fig.2 is a diagram of an existing route optimization solution according to the access scene A21. As shown in Fig.2, the two parties in communication (MN1 and MN2) access different MAGs and a same LMA. Upon receiving data communicated by the two parties, the LMA may trigger local route optimization, adjusting a data transmission route from MN1<->MAG1<->LMA <->MAG2<->MN2 to MN1 <->MAG1 <->MAG2<->MN2.

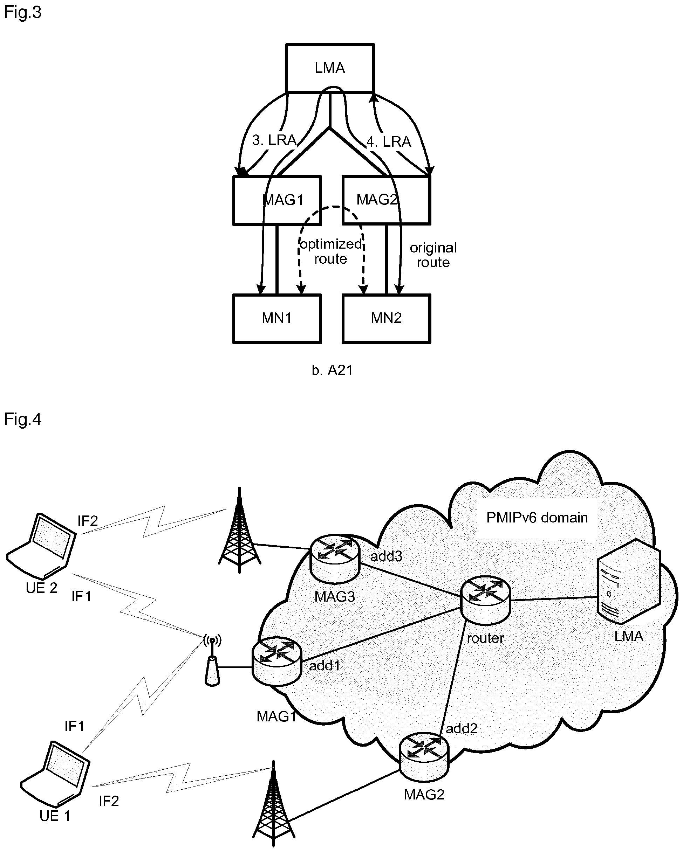

Fig.3 is a diagram of an existing route optimization solution according to the access scene A12. As shown in Fig.3, the two parties in communication (MN1 and MN2) access a same MAG and different LMAs. Upon receiving a packet of the two parties in communication, the MAG may trigger route optimization, adjusting a data transmission path from MN1<->MAG1<->LMA1<->LMA2<->MAG1<->MN2 to MN1<->MAG1<->MAG2.

By LMA or MAG decision making based on the introduced three route optimization solutions in different single-access scenes, data originally forwarded by an LMA may be transmitted directly among relevant MAGs without being forwarded by LMA, thereby greatly reducing a data transmission delay and network-side bandwidth consumption, as well as enhancing user experience.

However, as technology develops, an increasing number of the mobile terminals are equipped with multiple network interfaces, and it is increasingly common for a mobile node to access a network simultaneously using multiple network interfaces. The following introduction takes the PMIPv6 protocol as an example.

Fig.4 is a diagram of a scene in which multi-connection mobile nodes are deployed in a PMIPv6 domain in related art. As shown in Fig.4, a mobile node UE1 may have two network interfaces IF1 and IF2, both accessing the PMIPv6 domain. A mobile node UE2 may also have two network interfaces IF1 and IF2, both accessing the PMIPv6 domain. In addition, UE1-IF1 may access the same MAG1 as UE2-IF1. The network interfaces IF2 of UE1 and UE2 may access MAG2 and MAG3, respectively.

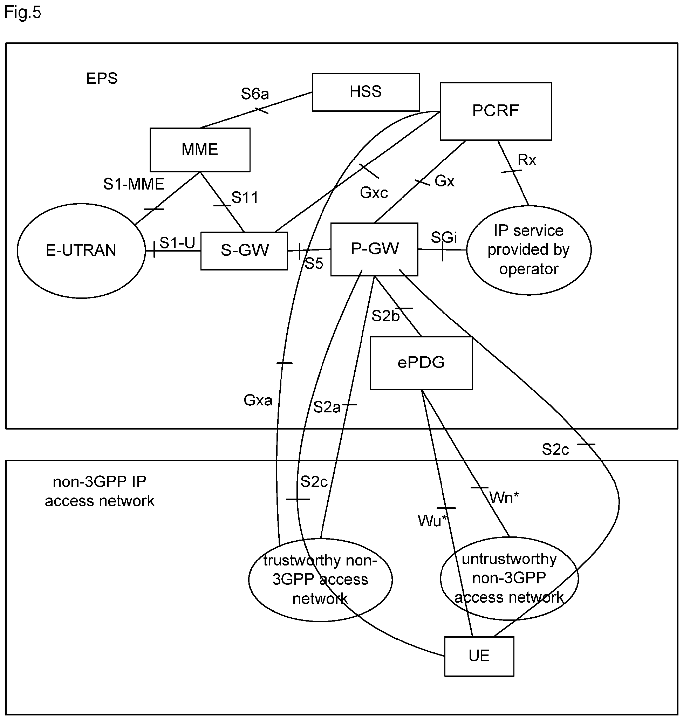

In addition, in existing 3GPP, the mobile terminal may support accessing a 3GPP core network through a 3rd Generation Partnership Project (3GPP) access system and a non-3GPP access system simultaneously, and may implement seamless handover and traffic migration, increasing user service experience. Specific architecture of 3GPP access and non-3GPP access is as shown in Fig.5., which shows a diagram of architecture of a UE accessing a 3GPP system by 3GPP access or by non-3GPP access. A 3GPP Evolved Packet System (EPS) may consist of an Evolved Universal Terrestrial Radio Access Network (E-UTRAN), a Mobility Management Entity (MME), a Serving Gateway (S-GW), a packet Data Network Gateway (a PDN GW or P-GW), and a Home Subscriber Server (HSS).

The EPS may support interworking with a non-3GPP system (such as a WLAN access system). Interworking with a non-3GPP system may be implemented through an interface S2a/b/c. A PDN GW may serve as an anchor between the 3GPP system and a non-3GPP system. In a diagram of EPS system architecture, non-3GPP access may be divided into untrustworthy non-3GPP access and trustworthy non-3GPP access. With untrustworthy non-3GPP access, connection to a PDN GW may have to go through an Evolved Packet Data Gateway (ePDG), with an interface S2b between the ePDG and the PDN GW. With trustworthy non-3GPP access, connection to the PDN GW may be made directly through an interface S2a, and information interaction at the interface S2a may be performed using a PMIP protocol. In addition, an interface S2c may support user-plane control and mobility between a User Equipment (UE) and the PDN GW. A supported mobility management protocol may be a mobile IPv6 supporting Dual Stack Hosts and Routers (DSMIPv6), which may be configured for both untrustworthy non-3GPP access and trustworthy non-3GPP access.

A GTP protocol or the PMIPv6 protocol may be used between a functional entity of a 3GPP access system or a non-3GPP access system and a 3GPP core network. One aspect of concerns is data transmission route optimization in the multi-access scene. However, existing local route optimization technology covers only PMIPv6 local route optimization in the single-access scene.

No effective solution for proper local route optimization in the multi-access scene is provided in existing art.

EP 2 375 796 A1 discloses local routing optimization as follows. After receiving a packet sent from a Mobile Node, MN, to a Correspondent Node, CN, an MAG queries for a binding update entry corresponding to the MN. When an MAG local routing flag is set in the binding update entry, the packet is sent to the CN; and when a Local Mobile Anchor (LMA) local routing flag is set in the binding update entry, the packet is sent to an MAG of the CN.

### SUMMARY

Embodiments herein provide a route optimization method and apparatus, capable of providing an effective solution for proper local route optimization in the multi-access scene.

The features of method and apparatus according to the present disclosure are defined in the independent claims, and the preferable features according to the present invention are defined in the dependent claims.

With an embodiment herein, in a multi-access scene where parties in communication each have a network interface accessing a same mobile access gateway MAG, local route optimization in the scene may be performed according to a feature of a data flow transmission path with reference to a feature of actual data transmitting interfaces of both parties in communication, providing a solution for proper local route optimization in the multi-access scene, such that an optimized data transmission path may be greatly shortened, reducing a data transmission delay and an occupied network-side bandwidth.

The description merely outlines a technical solution herein. To understand the technical means herein more clearly so as to implement content herein, and to make the above and other purpose, characteristics, and advantages of the disclosure easier to understand, specific implementation modes herein are exemplified below.

### BRIEF DESCRIPTION OF THE DRAWINGS

Fig.1 is a diagram of an existing route optimization solution according to the access scene A11.
Fig.2 is a diagram of an existing route optimization solution according to the access scene A21.
Fig.3 is a diagram of an existing route optimization solution according to the access sceneA12.
Fig.4 is a diagram of a scene in which multi-connection mobile nodes are deployed in a PMIPv6 domain in related art.
Fig.5 is a diagram of existing architecture of a UE accessing a 3GPP system by 3GPP access or by non-3GPP access.
Fig.6 is a flowchart of a route optimization method according to an embodiment herein.
Fig.7 is a flowchart of a method for selecting a local route optimization mechanism by an LMA according to an embodiment herein.
Fig.8 is a diagram of a method 1 for optimizing a local route in a scene in which a MAG accessed by a data transmitting interface of one of two parties in communication differs from that accessed by a data transmitting interface of the other party according to an embodiment herein.
Fig.9 is a diagram of a method 2 for optimizing a local route in a scene in which a MAG accessed by a data transmitting interface of one of two parties in communication differs from that accessed by a data transmitting interface of the other party according to an embodiment herein.
Fig.10 is a diagram of a method for optimizing a local route in a PMIPv6 scene in which a data transmitting interface of one of two parties in communication accesses a MAG also accessed by the other party according to an embodiment herein.
Fig.11 is a diagram of a method for optimizing a local route for data transmission between two parties in communication in a scene in which a UE accesses the 3GPP and the WLAN simultaneously according to an embodiment herein.
Fig.12 is a diagram of a structure of a route optimization apparatus according to an embodiment herein.

### DETAILED DESCRIPTION

Embodiments herein provide a route optimization method and apparatus, capable of providing an effective solution for proper local route optimization in a multi-access scene. The disclosure may be further elaborated below with reference to accompanying drawings and embodiment. Note that embodiments described here are only for explaining the disclosure instead of limiting the disclosure.

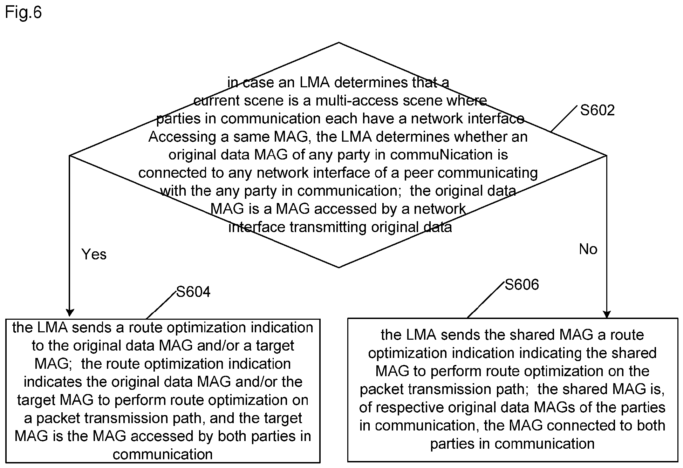

An embodiment may provide a route optimization method. Fig.6 is a flowchart of a route optimization method according to an embodiment herein. As shown in Fig.6, the method may include step S602-step S606.

In step S602, an LMA detects whether a current communicating scene is a multi-access scene where parties in communication each have a network interface accessing a same MAG. In case the LMA determines that the current scene is a multi-access scene where parties in communication each have a network interface accessing a same MAG, the LMA determines whether an original data MAG of any party in communication is connected to any network interface of a peer communicating with the any party in communication. An original data MAG may be a MAG accessed by a network interface transmitting original data. In case an original data MAG of any party in communication is connected to any network interface of a peer communicating with the any party in communication, the flow may go to step S604. Otherwise when no original data MAG of any party in communication is connected to any network interface of a peer communicating with the any party in communication, the flow may go to step S606.

In step S604, the LMA sends a route optimization indication to the original data MAG and/or a target MAG. The route optimization indication indicates the original data MAG and/or the target MAG to perform route optimization on a packet transmission path. The target MAG is the MAG accessed by both parties in communication.

In step S606, the LMA sends the shared MAG a route optimization indication. The route optimization indication may indicate the shared MAG to perform route optimization on the packet transmission path. The shared MAG may be, of respective original data MAGs of the parties in communication, the MAG connected to both parties in communication.

With the method, in a multi-access scene where parties in communication each have a network interface accessing a same mobile access gateway MAG, local route optimization in the scene may be performed according to a feature of a data flow transmission path with reference to a feature of actual data transmitting interfaces of both parties in communication, providing a solution for proper local route optimization in the multi-access scene, such that an optimized data transmission path may be greatly shortened, reducing a data transmission delay and an occupied network-side bandwidth.

In step S602, the LMA may detect whether the current communicating scene is the multi-access scene where parties in communication each have a network interface accessing the same MAG as follows. The LMA may acquire any packet forwarded by the LMA in the current communicating scene. The LMA may acquire, according to the any packet, a source IP address and a destination IP address of the any packet. The LMA may determine, according to the source IP address and the destination IP address, whether both parties in communication of the any packet access a local PMIPv6 domain. When both parties in communication of the any packet access the local PMIPv6 domain, the LMA may acquire, according to the source IP address and the destination IP address, binding cache information of the two parties in communication. The binding cache information may include a binding cache entry. The LMA may determine, according to a number of the binding cache entry, whether multiple network interfaces of at least one of the two parties in communication access the local PMIPv6 domain. When multiple network interfaces of at least one of the two parties in communication access the local PMIPv6 domain, The LMA may determine whether the two parties in communication each have a network interface accessing the same MAG. When the two parties in communication each have a network interface accessing a same MAG, the LMA may determine whether all original data MAGs of the two parties in communication access the same MAG. When not all original data MAGs of the two parties in communication access the same MAG, the LMA may determine that the current communicating scene is the multi-access scene where the parties in communication each have a network interface accessing the same MAG.

The LMA may determine whether the two parties in communication each have a network interface accessing the same MAG as follows. The LMA may acquire a Care-of Address in the binding cache entry of each of the two parties in communication. The LMA may determine whether the Care-of Addresses of the two parties in communication are the same. When the Care-of Addresses of the two parties in communication are the same, it may be determined that the two parties in communication each have a network interface accessing a same MAG. Otherwise when the Care-of Addresses of the two parties in communication are not the same, it may be determined that the two parties in communication have no network interface accessing a same MAG.

When the two parties in communication have no network interface accessing a same MAG, the LMA may execute a local route optimization solution A21. When all original data MAGs of the two parties in communication access the same MAG, the LMA may execute a local route optimization solution A11. Both the local route optimization solution A21 and the local route optimization solution A11 have been introduced, which will not be repeated.

In step S604, the LMA may send the original data MAG and/or the target MAG the route optimization indication indicating the original data MAG and/or the target MAG to perform route optimization on the packet transmission path as follows. The LMA may send the route optimization indication to both the target MAG and the original data MAG. The target MAG may forward a packet of a network interface to the network interfaces connected to the target MAG. The original data MAG may update a route. The original data MAG may forward the original data to the target MAG through a tunnel.

In step S604, the LMA may also send the original data MAG and/or the target MAG the route optimization indication indicating the original data MAG and/or the target MAG to perform route optimization on the packet transmission path as follows. The LMA may send the original data MAG the route optimization indication. The route optimization indication may include an IP address of the target MAG. The original data MAG may send, according to the IP address of the target MAG, the target MAG the route optimization indication. The target MAG may forward a packet of a network interface to the network interfaces connected to the target MAG. The original data MAG may update a route . The original data MAG may forward the original data to the target MAG through a tunnel.

In step S604, the LMA may also send the original data MAG and/or the target MAG the route optimization indication indicating the original data MAG and/or the target MAG to perform route optimization on the packet transmission path as follows. The LMA may send the route optimization indication to the original data MAG. The original data MAG may update a route. The original data MAG may forward the original data to the target MAG through a tunnel.

In step S606, the LMA may send the shared MAG a route optimization indication indicating the shared MAG to perform route optimization on the packet transmission path as follows. The LMA may send the shared MAG the route optimization indication. The shared MAG may forward packets of the parties in communication to the network interfaces of the parties in communication connected to the shared MAG.

Two parties in communication may access a local PMIPv6 domain through a WLAN and a 3GPP. For example, two interfaces of UE1 and UE2 may access a core network respectively through WLAN and 3GPP. Both interface 1 of UE1 and interface 1 of UE2 may be connected to the WLAN. The interface 2 of the UE1 may be connected to S-GW1. The interface 2 of the UE2 may be connected to S-GW2. the WLAN access network replaces MAG1. S-GW1 replaces MAG2. S-GW2 replaces MAG3. P-GW replaces LGW. In addition, a protocol between the S-GW and the P-GW, and a protocol between the WLAN access network and the P-GW may support both the PMIPv6 protocol and a GTP protocol. A mobile terminal may implement route optimization through a logic interface mode or a weak host model.

In the embodiment, a multi-access scene where parties in communication each have a network interface accessing a same MAG has been analyzed, and a method for optimizing a possible data transmission mode thereof has been proposed. This is introduced in detail below through specific embodiment and accompanying drawings.

### Embodiment 1

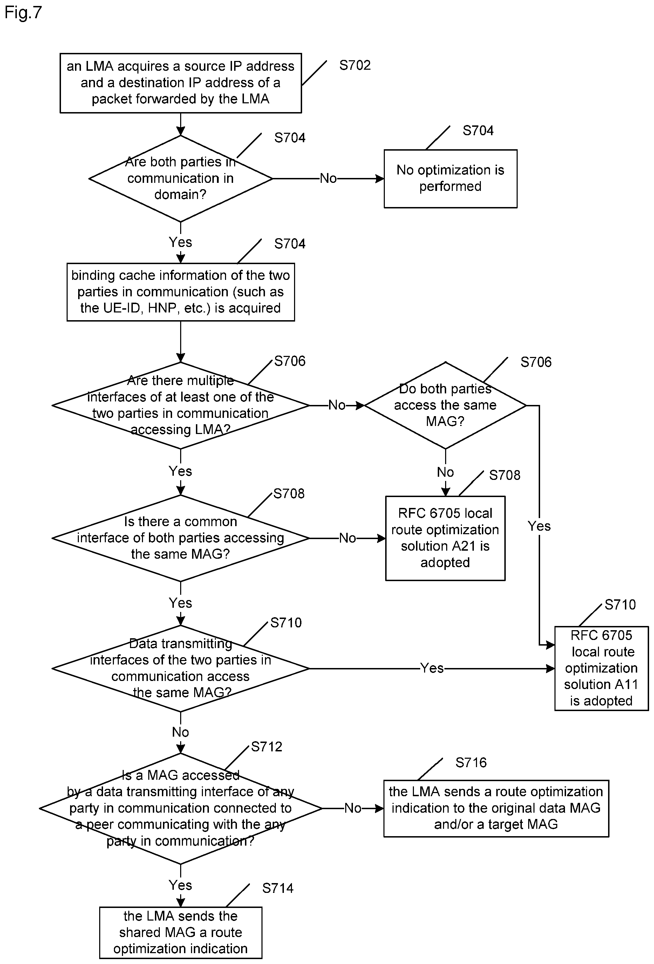

The embodiment may provide a method for optimizing a local route in a scene where a MAG accessed by a data transmitting interface of a first party in PMIPv6 communication differs from that accessed by a data transmitting interface of a peer (the other/second party) communicating with the first party in PMIPv6 communication. UE1 and UE2 each may access a PMIPv6 network domain through two interfaces. Both interface 1 of UE1 and interface 1 of UE2 access MAG1. Interface 2 of UE1 and interface 2 of UE2 access MAG2 and MAG3, respectively. Assume that original data are transmitted via interfaces 2 of the two parties in communication. Fig.7 is a flowchart of a method for selecting a local route optimization mechanism by an LMA according to an embodiment herein. As shown in Fig.7, the method may include step S702-step S716) as follows.

In step S702, an LMA may monitor and capture a packet (used in the domain) forwarded by the LMA, and acquire a source IP address and a destination IP address of the packet.

In step S704, LMA may determine, according to the IP addresses of the two parties in communication, whether both the two parties in communication access the local PMIPv6 domain. When both parties access the local PMIPv6 domain, the LMA may acquire, according to the source IP address and the destination IP address, binding cache information of the two parties in communication, such as a UE-ID, and then the flow may continue at step S706. Otherwise at least one of the two parties in communication is out of the domain, and local route optimization may end.

In the embodiment, the LMA may maintain a binding cache entry for each network interface of a mobile node. In addition, the LMA may acquire information on binding cache entries of interfaces of a terminal through the UE-ID. A cache entry of an interface may include a home network prefix of the network interface, a mobile node link-layer identifier, and an address of a MAG connected to the interface (namely a Care-of Address), etc.

In step S706, the LMA may determine, according to a binding cache entry number acquired through the UE-ID, whether multiple network interfaces of at least one of the two parties in communication access the local PMIPv6 domain. When multiple network interfaces of at least one of the two parties in communication access the local PMIPv6 domain, the flow may continue at step S708. (Otherwise when neither party has multiple network interfaces accessing the local PMIPv6 domain, it may be determined that both parties in communication are in a single-access scene.) The LMA may continue to determine whether the two parties in communication access a same MAG. When the two parties in communication access a same MAG, the local route optimization solution A11 in RFC 6705 may be adopted. Otherwise when the two parties in communication access different MAGs, the local route optimization solution A21 in RFC 6705 may be adopted.

In step S708, it may be determined whether the two parties in communication each have a network interface accessing a same MAG. When the two parties in communication each have a network interface accessing a same MAG, the flow may continue at step S710. Otherwise when no interface of the two parties in communication accesses a same MAG, the local route optimization solution A21 as in RFC 6705 may be adopted.

It may be determined whether the two parties in communication each have a network interface accessing a same MAG by determining whether a Care-of Address in a binding cache entry of one of the two parties in communication is the same as that in a binding cache entry of the other. As shown in Fig.4, the LMA may acquire Care-of Addresses add1 (MAG1) and add2 of network interfaces UE1-IF1 and UE2-IF2 respectively through the UE-ID1; and may acquire Care-of Addresses add1 and add3 of UE2-IF1 and UE2-IF2 respectively through the UE-ID2. The add1, add2, and add3 are IP addresses of external interfaces of the MAG1, MAG2 and MAG3. The LMA may detect that Care-of Addresses of interfaces IF1 of both UE1 and UE2 are add1, and thus may determine that UE 1 and UE 2 each have a network interface accessing a same MAG.

In step S710, it may be determined whether all network interfaces transmitting original data of the two parties in communication access the same MAG (namely the original data MAG in an aforementioned embodiment). When all network interfaces transmitting original data of the two parties in communication access the same MAG, the local route optimization solution A11 in RFC 6705 may be adopted. Otherwise when not all network interfaces transmitting original data of the two parties in communication access the same MAG, the flow may continue at step S712. A network interface transmitting the original data may refer to a network interface for sending and receiving data triggering local route optimization by the LMA prior to the local route optimization.

In step S712, it may be determined whether a MAG accessed by an original data transmitting interface of any of the two parties in communication is connected to a network interface of the other party. When a MAG accessed by an original data transmitting interface of any of the two parties in communication is connected to a network interface of the other party, the flow may go to step S714. Otherwise when no MAG accessed by an original data transmitting interface of any of the two parties in communication is connected to a network interface of the other party, the flow may go to step S716.

In step S714, the LMA may send a shared MAG a route optimization indication. The route optimization indication may indicate the shared MAG to perform route optimization on the packet transmission path. The shared MAG may be, of respective original data MAGs of the parties in communication, a MAG connected to both parties in communication.

In step S716, the LMA may send a route optimization indication to the original data MAG and/or a target MAG. The route optimization indication may indicate the original data MAG and/or the target MAG to perform route optimization on a packet transmission path.

For example, in Fig.4, when the LMA decides that network interfaces transmitting the original data are UE1-IF1 and UE2-IF1, the MAG connected to the original data transmitting interface UE1-IF1 of one party (UE1) of the two parties in communication is also connected to the interface UE2-IF1 of the other party. When network interfaces transmitting the original data are UE1-IF2 and UE2-IF2, original data transmitting interfaces of the two parties in communication access different MAGs.

### Embodiment 2

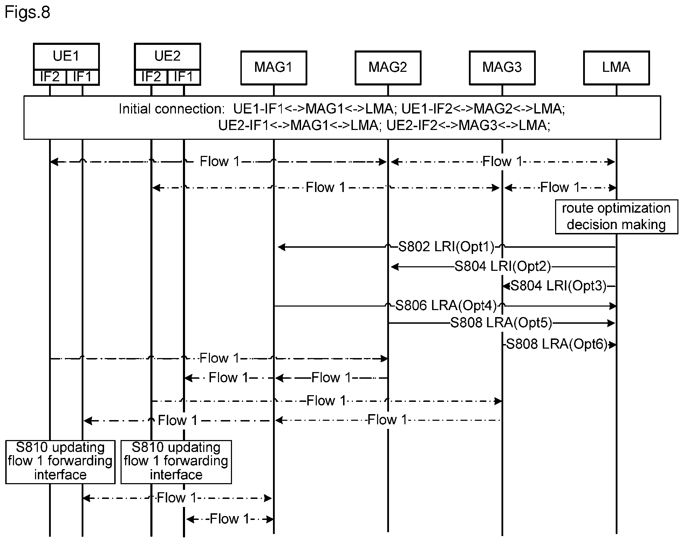

In the example, assume that UE1-IF1 and UE2-IF1 are respectively connected to MAG1, UE1-IF2 is connected to MAG2, and UE2-IF2 is connected to MAG3. Traffic 1 may be transmitted between UE1-IF2 and UE2-IF2. The LMA may decide, according to step S712 in Embodiment 1, that no network interface transmitting the original data is connected to a network interface of the other party. The LMA may respectively inform MAG1, MAG2 and MAG3 to perform route optimization. After route optimization, the traffic may go through a path UE1-IF1<->MAG1<->UE2 -IF1. The route optimization method may be shown by a diagram of a method 1 for optimizing a local route in a scene in which a MAG accessed by a data transmitting interface of one of two parties in communication differs from that accessed by a data transmitting interface of the other party as shown in Fig.8. The method 1 may include step S802-step S810 as follows.

In step S802, the LMA may send a MAG accessed by both parties in communication (namely the target MAG in the embodiment, MAG1 as shown in Fig.4) a route optimization indication. The indication may contain UE-ID options of both parties in communication, home network prefixes of the original data transmitting interfaces, and home network prefixes of network interfaces connected to the target MAG. When home network prefixes of network interfaces of a mobile node are the same, what follows the UE-ID option in the indication may contain only one home network prefix option.

In step S804, the LMA may send a MAG accessed by original data transmitting interfaces of either party in communication (namely an original data MAG) a route optimization indication. The indication may contain the IP address of the target MAG, and the UE-ID of an interface of one party in communication connected to the target MAG and an HNP option.

In step S806, after receiving the route optimization indication, the target MAG may update the route and forward a packet with a network prefix matching a mobile node to an interface of the mobile node connected to the target MAG. As shown in Fig.8, MAG1 may forward packets with network prefixes UE1-HNP1 and UE1-HNP2 to the mobile node network interface UE1-IF1 connected to MAG1; MAG1 may forward packets with network prefixes UE2-HNP1 and UE2-HNP2 to the mobile node network interface UE2-IF1 connected to MAG1; and then MAG1 may send the LMA a route optimization response, informing the LMA that the route optimization indication has been received, and route optimization completes.

In step S808, after receiving the route optimization indication, a MAG connected to an original data transmitting interface (namely an original data MAG) may update the route and forward the original data to the target MAG through a tunnel; and then send the LMA a route optimization response, informing the LMA that the route optimization indication has been received and optimization completes. At the moment, the session UE1 may send data to the UE2 via a transmission path UE1-IF2->MAG2->MAG1->UE2-IF1; and UE2 may send data to the UE1 via a transmission path UE2-IF2->MAG3->MAG1->UE1-IF1.

In step S810, when UE1 or UE2 receives, from network interface IF1, downlink session data sent by interface IF2, the mobile node may take this as a network-side flow migration trigger. Adjustment may be made to transmit uplink data of the original session also through interface IF1 receiving the session downlink data. At the moment, the two parties in communication may transmit data via a transmission path UE1-IF1<->MAG<->UE2 -IF1.

To this end, the mobile terminal may adopt a logic interface or a weak host model. According to the definition of a logic interface, a mobile terminal using a logic interface may automatically trigger uplink flow handover according to a downlink traffic flow. When a weak host model is adopted, extension to the mobile terminal may be required, specifically as follows. The mobile terminal may maintain, for each network interface, a flow status table. The flow status table may store flow information of uplink traffic sent by the each network interface. The mobile terminal may then monitor downlink data received by a network interface, and sense network-side flow migration by matching downlink traffic flow information with the flow status table. When the mobile terminal receives a downlink traffic flow at a network interface, and finds out by matching that the flow status table of the network interface contains no uplink flow information of the traffic. Instead, the uplink flow information of the traffic is found in the flow status table corresponding to another network interface. The mobile terminal may take the event as a network-side flow migration trigger and trigger flow handover process. Namely, the uplink flow information of the traffic may be deleted from the flow status table of the original interface, and may be added to the flow status table of the network interface receiving the downlink flow data. Then, route updating may be performed, adjusting the uplink traffic flow to be transmitted via interface receiving downlink data.

### Embodiment 3

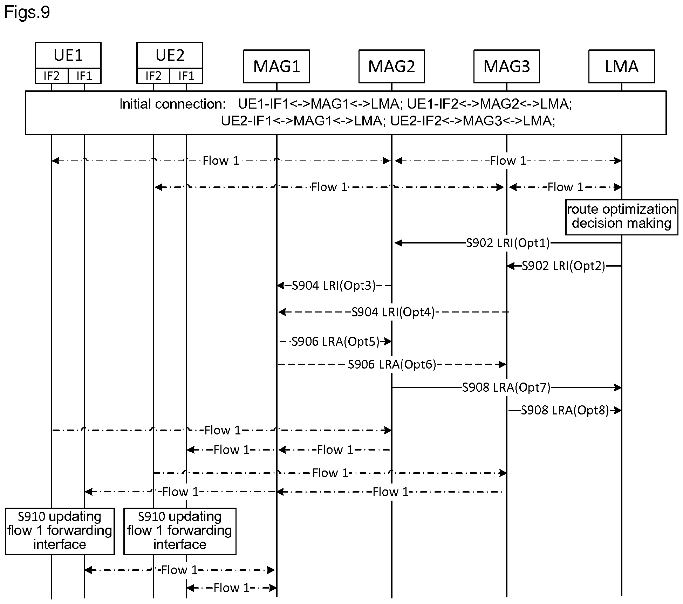

Embodiment 3 may provide another method for optimizing a local route in a scene where a MAG accessed by a data transmitting interface of a first party in PMIPv6 communication differs from that accessed by a data transmitting interface of a peer (the other/second party) communicating with the first party in PMIPv6 communication. Embodiment 3 differs from Embodiment 2 in that the LMA no longer directly informs MAG1 to perform route optimization. Instead, MAG1 may be informed, by MAG2 and MAG3, of the route optimization decision. Here, a method for optimizing a local route may be selected according to a flow as in the diagram of a method 2 for optimizing a local route in a scene in which a MAG accessed by a data transmitting interface of one of two parties in communication differs from that accessed by a data transmitting interface of the other party as shown in Fig.9. As shown in Fig.9, the method 2 may include step S902-step S910 as follows.

In step S902, the LMA may send a MAG connected to the original data sending interface of a party in communication a local route optimization indication to trigger route optimization by the MAG. The message may contain the UE-ID of the mobile node network interface connected to the MAG and the HNP option, as well as the IP address of the target MAG.

In step S904, after receiving a local route optimization indication containing the IP address of another MAG, a MAG connected to the original data sending interface of a party in communication may send the UE-ID of the mobile node network interface connected to the MAG and the home network prefix contained therein to the address.

In step S906, after receiving the route optimization indication, the target MAG may acquire the UE-ID and the home network prefix in the message, and then acquire, by looking up the UE-ID, information on a network interface connected to the target MAG. The target MAG then may add a route, and forward a packet with a network prefix matching the network prefix acquired from the route optimization indication to a network interface of the mobile node connected to the target MAG. As shown in the Figure, after receiving a route optimization indication sent by MAG2 and/or MAG3, MAG1 may forward packets with destination address network prefixes UE1-HNP2 and UE2-HNP2 respectively to the mobile node network interfaces UE1-IF1 and UE2-IF1 connected to MAG1. The target MAG may then send a route optimization response, informing the route optimization indication sender that the route optimization indication has been received and optimization completes.

In step S908, after receiving the route optimization indication, a MAG connected to an original data transmitting interface of a party in communication may update the route and forward the original data to the target MAG through a tunnel; and then send the LMA a route optimization response, informing the LMA that the route optimization indication has been received and optimization completes. At the moment, UE1 may send a packet to the UE2 via a transmission path UE1-IF2->MAG2->MAG1->UE2-IF1; and UE2 may send a packet to the UE1 via a transmission path UE2-IF2->MAG3->MAG1->UE1-IF1.

Step S904 and step S906 may be optional. When step S904 and step S906 are not executed, after receiving a packet sent by MAG2 or MAG3, MAG1 may modify a data transmission path originally going through MAG2 or MAG3, such that a subsequent data packet is transmitted through MAG1 instead of through MAG2 or MAG3, as shown in detail in step S910.

In step S910, when UE1 or UE2 receives, from network interface IF1, downlink session data sent by interface IF2, the mobile node may take this as a network-side flow migration trigger. Adjustment may be made to transmit uplink data of the original session also through interface IF1 receiving the session downlink data. At the moment, the two parties in communication may transmit data via a transmission path UE1-IF1 <->MAG<->UE2 -IF1.

### Embodiment 4

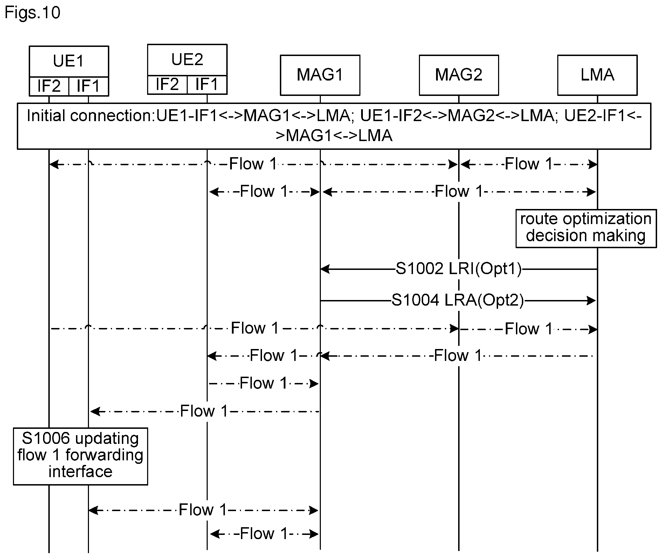

In Embodiment 4, as shown in Fig.4, UE1 and UE2 each may access a PMIPv6 network domain through two interfaces. Both interface 1 of UE1 and interface 1 of UE2 access MAG1, the interface 2 of the UE1 accesses MAG2. Embodiment 4 is described with the example of optimizing a data transmission route between UE1-IF2 and UE2-IF1. First, the LMA may make, according to step S712 in Embodiment 1, a decision when the original data transmitting interface of one party is connected to a network interface of the other party. The decision may select a method for optimizing a local route as shown in a diagram of a method for optimizing a local route in a PMIPv6 scene in which a data transmitting interface of one of two parties in communication accesses a MAG also accessed by the other party as shown in Fig.10. As shown in Fig.10, the method may include step S1002-step S1006 as follows.

In step S1002, of MAGs connected to original data transmitting interfaces of the two parties in communication, the LMA may send the MAG connected to both parties (namely the shared MAG as aforementioned, MAG1 in Fig.4) a route optimization indication. The indication message may include UE-IDs of both parties in communication and prefix information of network interfaces of both parties in communication. When home network prefixes of network interfaces of a mobile node are the same, what follows the UE-ID option in the LRI message may contain only a home network prefix option.

In step S1004, after receiving the route optimization indication, the shared MAG may update the route, and forward any packet with a network prefix matching that of the terminal UE of either party in communication to the network interface of the terminal connected to the shared MAG. Namely, MAG1 may forward packets with network prefixes UE1-HNP1 and UE1-HNP2 to UE1-IF1, and forward packets with destination address network prefixes UE2-HNP1 and UE2-HNP2 to UE2-IF1; and then MAG1 may send the LMA a route optimization response, informing the LMA that the route optimization indication has been received and optimization completes. At the moment, UE1 may send a packet to UE2 via a transmission path UE1-IF2->MAG2->LMA -> MAG1->UE2-IF1, and UE2 may send a packet to UE1 via a transmission path UE2-IF1->MAG1->UE1-IF1.

In step S1006, when receiving data sent back by UE2 via network interface IF1, UE1 may find out that the receiving interface differs from the interface sending the uplink session data. UE1 may take this signal as a network-side flow migration trigger, and send uplink data of the session also through IF1. At the moment, the data transmission path between UE1 and UE2 may be UE1-IF1<->MAG1<->UE2-IF1.

### Embodiment 5

Here, two interfaces of each of UE1 and UE2 access a core network respectively through WLAN and 3GPP. Both interface 1 of UE1 and interface 1 of UE2 are connected to the WLAN. Interface 2 of the UE1 is connected to S-GW1. The interface 2 of the UE2 may be connected to S-GW2. A specific operation flow here differ from that in Embodiment 2 only in that the WLAN access network replaces MAG1, S-GW1 replaces MAG2, S-GW2 replaces MAG3, and P-GW replaces LGW. In addition, a protocol between the S-GW and the P-GW, and a protocol between the WLAN access network and the P-GW may support both the PMIPv6 protocol and a GTP protocol.

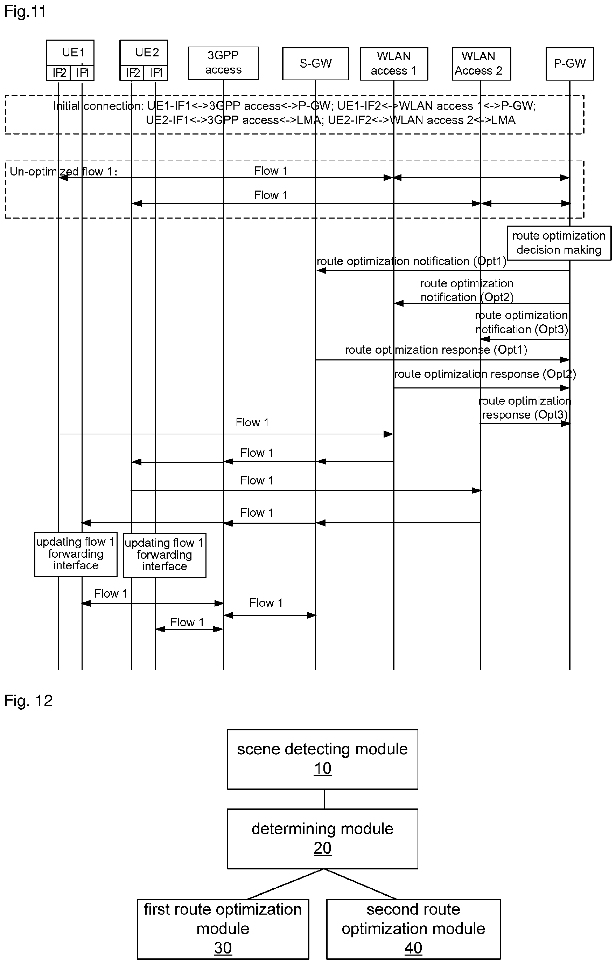

Fig.11 is a diagram of a method for optimizing a local route for data transmission between two parties in communication in a scene in which a UE accesses the 3GPP and the WLAN simultaneously. As shown in Fig.11, the method may include a flow as follows.

P-GW may send the WLAN access network accessed by both parties in communication a route optimization indication. When the PMIPv6 protocol is adopted between the WLAN access network and P-GW, one may refer to step S802 for details of the route optimization indication and content therein. When the GTP protocol is adopted between the WLAN access network and P-GW, the route optimization indication may be an existing message or an added message according to the GTP protocol. Such an existing message may be a bearer-updating request. The bearer-updating request may include an option as described in step S802.

The P-GW may send a route optimization indication to the S-GW1 accessed by an original data sending interface of one party in communication. The route optimization indication and options thereof may be identical to those as in step S1002. The P-GW may send a route optimization indication to the S-GW2 accessed by an original data sending interface of the other party in communication. The route optimization indication and options thereof may be identical to those as in step S1102.

After receiving the route optimization indication, the WLAN access connected to an original data transmitting interface may update the route and forward the original data to the target WLAN access through a tunnel; and then send the P-GW a route optimization response, informing the P-GW that the route optimization indication has been received and optimization completes. At the moment, the session UE1 may send data to the UE2 via a transmission path UE1-IF2->S-GW1->WLAN access ->UE2-IF1; and UE2 may send data to the UE1 via a transmission path UE2-IF2->S-GW1->WLAN access ->UE1-IF1.

When UE1 and/or UE2 receives, from network interface IF1, downlink session data sent by interface IF2, the mobile node may take this as a network-side flow migration trigger. Adjustment may be made to transmit uplink data of the original session also through interface IF1 receiving the session downlink data. At the moment, the two parties in communication may transmit data via a transmission path UE1-IF1<->WLAN access <->UE2 -IF1.

In addition, in the flow as shown in Fig.11, UE1 and UE2 may perform access from the same 3GPP or from different 3GPP.

The embodiment may be configured for optimization to hand UE access traffic via 3GPP over to access and forwarding via WLAN. The embodiment may as well be configured for a case in which interface 1 of UE1 and interface 1 of UE2 both access through 3GPP, and interface 2 of UE1 and interface 2 of UE2 are connected respectively to WLAN access 1 and WLAN access 2. In this case, S-GW replaces MAG1 of Embodiment 2, WLAN access 1 and WLAN access 2 respectively replace MAG2 and MAG3 of Embodiment 2, and the path after route optimization may be: UE1-IF1<->S-GW <->3GPP access <->UE2 -IF1.

In Fig.11, the path after route optimization may be: UE1-IF1<->3GPP access <->UE2 -IF1. In this case, the P-GW may directly send the 3GPP access a route optimization indication. The 3GPP access replaces/ is equivalent to MAG1 of Embodiment 2.

In accordance with a route optimization method introduced in an aforementioned embodiment, an embodiment herein may provide a route optimization apparatus. The apparatus in general may apply to an LMA to implement the embodiment. Fig.12 is a diagram of a structure of a route optimization apparatus according to an embodiment herein. As shown in Fig.12, the apparatus may include: a scene detecting module 10, a determining module 20, a first route optimization module 30, and a second route optimization module 40. The structure is elaborated below.

The scene detecting module 10 may be configured for: detecting whether a current communicating scene is a multi-access scene where parties in communication each have a network interface accessing a same mobile access gateway MAG.

The determining module 20 may be connected to the scene detecting module 10, and may be configured for: when a detecting result of the scene detecting module 10 is yes, determining whether an original data MAG of any party in communication is connected to any network interface of a peer communicating with the any party in communication. The original data MAG may be a MAG accessed by a network interface transmitting original data.

The first route optimization module 30 may be connected to the determining module 20, and may be configured for: when the determining module 20 gives a determining result of 'no', sending a route optimization indication to the original data MAG and/or a target MAG. The route optimization indication may indicate the original data MAG and/or the target MAG to perform route optimization on a packet transmission path. The target MAG may be a MAG accessed by both parties in communication.

The second route optimization module 40 may be connected to the determining module 20, and may be configured for: when the determining module 20 gives a determining result of 'yes', sending the shared MAG a route optimization indication. The route optimization indication may indicate the shared MAG to perform route optimization on the packet transmission path. The shared MAG may be, of respective original data MAGs of the parties in communication, the MAG connected to both parties in communication.

With the apparatus, in a multi-access scene where parties in communication each have a network interface accessing a same mobile access point, local route optimization in the scene may be performed according to a feature of a data flow transmission path with reference to a feature of actual data transmitting interfaces of both parties in communication, providing a solution for proper local route optimization in the multi-access scene, such that an optimized data transmission path may be greatly shortened, reducing a data transmission delay and an occupied network-side bandwidth.

The scene detecting module 10 may include an address acquiring entity configured for acquiring any packet forwarded by the LMA in the current communicating scene, and acquiring, according to the any packet, a source IP address and a destination IP address of the any packet. The scene detecting module 10 may include a first access determining entity configured for determining, according to the source IP address and the destination IP address, whether both parties in communication of the any packet access a local ProxyMobilelPv6 PMIPv6 domain. The scene detecting module 10 may include an information acquiring entity configured for: when the first access determining entity gives a determining result of "yes", acquiring, according to the source IP address and the destination IP address, binding cache information of the two parties in communication. The binding cache information may include a binding cache entry. The scene detecting module 10 may include a second access determining entity configured for: determining, according to the number of the binding cache entry, whether multiple network interfaces of at least one of the two parties in communication access the local PMIPv6 domain. The scene detecting module 10 may include a processing entity configured for: when the second access determining entity gives a determining result of "yes", determining whether the two parties in communication each have a network interface accessing a same MAG. When the two parties in communication each have a network interface accessing a same MAG, the processing entity may be configured for determining whether all original data MAGs of the two parties in communication access the same MAG. When not all original data MAGs of the two parties in communication access the same MAG, the processing entity may determine that the current communicating scene is the multi-access scene where the parties in communication each have a network interface accessing the same MAG.

The first route optimization module 30 may include a first route optimization entity configured for: sending the target MAG and the original data MAG the route optimization indication. The route optimization indication may indicate the target MAG to forward a packet of a network interface to the network interfaces connected to the target MAG. The route optimization indication may indicate the original data MAG to update a route and forward the original data to the target MAG through a tunnel.

The first route optimization module 30 may include a second route optimization entity configured for: sending the original data MAG the route optimization indication. The route optimization indication may include the IP address of the target MAG. The route optimization indication may indicate the original data MAG to update a route and forward the original data to the target MAG through a tunnel. The route optimization indication may indicate the original data MAG to send the target MAG the route optimization indication according to the IP address of the target MAG. The route optimization indication may indicate the target MAG to forward a packet of a network interface to the network interfaces connected to the target MAG.

The first route optimization module 30 may include a third route optimization entity configured for: sending the original data MAG the route optimization indication. The route optimization indication may indicate the original data MAG to update a route and forward the original data to the target MAG through a tunnel.

The second route optimization module 40 may include a fourth route optimization entity configured for: sending the shared MAG the route optimization indication. The route optimization indication may indicate the shared MAG to forward packets of the parties in communication to the network interfaces of the parties in communication connected to the shared MAG.

An embodiment herein may further provide a non-transitory computer-readable storage medium. The computer-readable storage medium may store computer-executable instructions for executing the method.

It may be seen from the above description that with an embodiment herein, in a multi-access scene where parties in communication each have a network interface accessing a same network access point, local route optimization in the scene is proposed according to a feature of a data flow transmission path with reference to a feature of actual data transmitting interfaces of both parties in communication. With an embodiment herein, an optimized data transmission path may be greatly shortened compared to existing art, thus reducing a data transmission delay and an occupied network-side bandwidth .

An embodiment herein has been disclosed for purpose of illustration. Those skilled in the art will realize possible improvements, additions, and substitutions. Therefore, the scope herein should not be limited to embodiments herein.

In addition, an entity herein may be implemented by a Central Processing Unit (CPU), a Digital Signal Processor (DSP), or a Field-Programmable Gate Array (FPGA) in electronic equipment.

Those skilled in the art will understand that an embodiment herein may be provided as a method, system, or computer program product. Therefore, the disclosure may be in form of hardware, software, or a combination of the two. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

The first route optimization module 30 may be connected to the determining module 20, and may be configured for: when the determining module 20 gives a determining result of 'no', sending a route optimization indication to the original data MAG and/or a target MAG. The route optimization indication may indicate the original data MAG and/or the target MAG to perform route optimization on a packet transmission path. The target MAG may be a MAG accessed by both parties in communication.

The second route optimization module 40 may be connected to the determining module 20, and may be configured for: when the determining module 20 gives a determining result of 'yes', sending the shared MAG a route optimization indication. The route optimization indication may indicate the shared MAG to perform route optimization on the packet transmission path. The shared MAG may be, of respective original data MAGs of the parties in communication, the MAG connected to both parties in communication.

With the apparatus, in a multi-access scene where parties in communication each have a network interface accessing a same mobile access point, local route optimization in the scene may be performed according to a feature of a data flow transmission path with reference to a feature of actual data transmitting interfaces of both parties in communication, providing a solution for proper local route optimization in the multi-access scene, such that an optimized data transmission path may be greatly shortened, reducing a data transmission delay and an occupied network-side bandwidth.

The scene detecting module 10 may include an address acquiring entity configured for acquiring any packet forwarded by the LMA in the current communicating scene, and acquiring, according to the any packet, a source IP address and a destination IP address of the any packet. The scene detecting module 10 may include a first access determining entity configured for determining, according to the source IP address and the destination IP address, whether both parties in communication of the any packet access a local ProxyMobilelPv6 PMIPv6 domain. The scene detecting module 10 may include an information acquiring entity configured for: when the first access determining entity gives a determining result of "yes", acquiring, according to the source IP address and the destination IP address, binding cache information of the two parties in communication. The binding cache information may include a binding cache entry. The scene detecting module 10 may include a second access determining entity configured for: determining, according to the number of the binding cache entry, whether multiple network interfaces of at least one of the two parties in communication access the local PMIPv6 domain. The scene detecting module 10 may include a processing entity configured for: when the second access determining entity gives a determining result of "yes", determining whether the two parties in communication each have a network interface accessing a same MAG. When the two parties in communication each have a network interface accessing a same MAG, the processing entity may be configured for determining whether all original data MAGs of the two parties in communication access the same MAG. When not all original data MAGs of the two parties in communication access the same MAG, the processing entity may determine that the current communicating scene is the multi-access scene where the parties in communication each have a network interface accessing the same MAG.

The first route optimization module 30 may include a first route optimization entity configured for: sending the target MAG and the original data MAG the route optimization indication. The route optimization indication may indicate the target MAG to forward a packet of a network interface to the network interfaces connected to the target MAG. The route optimization indication may indicate the original data MAG to update a route and forward the original data to the target MAG through a tunnel.

The first route optimization module 30 may include a second route optimization entity configured for: sending the original data MAG the route optimization indication. The route optimization indication may include the IP address of the target MAG. The route optimization indication may indicate the original data MAG to update a route and forward the original data to the target MAG through a tunnel. The route optimization indication may indicate the original data MAG to send the target MAG the route optimization indication according to the IP address of the target MAG. The route optimization indication may indicate the target MAG to forward a packet of a network interface to the network interfaces connected to the target MAG.

The first route optimization module 30 may include a third route optimization entity configured for: sending the original data MAG the route optimization indication. The route optimization indication may indicate the original data MAG to update a route and forward the original data to the target MAG through a tunnel.

The second route optimization module 40 may include a fourth route optimization entity configured for: sending the shared MAG the route optimization indication. The route optimization indication may indicate the shared MAG to forward packets of the parties in communication to the network interfaces of the parties in communication connected to the shared MAG.

An embodiment herein may further provide a non-transitory computer-readable storage medium. The computer-readable storage medium may store computer-executable instructions for executing the method.

It may be seen from the above description that with an embodiment herein, in a multi-access scene where parties in communication each have a network interface accessing a same network access point, local route optimization in the scene is proposed according to a feature of a data flow transmission path with reference to a feature of actual data transmitting interfaces of both parties in communication. With an embodiment herein, an optimized data transmission path may be greatly shortened compared to existing art, thus reducing a data transmission delay and an occupied network-side bandwidth .

An embodiment herein has been disclosed for purpose of illustration. Those skilled in the art will realize possible improvements, additions, and substitutions. Therefore, the scope herein should not be limited to embodiments herein.

In addition, an entity herein may be implemented by a Central Processing Unit (CPU), a Digital Signal Processor (DSP), or a Field-Programmable Gate Array (FPGA) in electronic equipment.

Those skilled in the art will understand that an embodiment herein may be provided as a method, system, or computer program product. Therefore, the disclosure may be in form of hardware, software, or a combination of the two. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

## Claims

1. A route optimization method, **characterized in that** the method comprises:
acquiring, by a Local Mobility Anchor LMA, any packet forwarded by the LMA, and acquiring, according to the any packet, a source IP address and a destination IP address of the any packet;
determining, by the LMA according to the source IP address and the destination IP address, whether both parties in communication of the any packet access a local ProxyMobilelPv6 PMIPv6 domain; when both parties in communication of the any packet access the local PMIPv6 domain, acquiring, by the LMA according to the source IP address and the destination IP address, binding cache information of the two parties in communication, wherein the binding cache information comprises a binding cache entry;
determining, by the LMA according to a number of the binding cache entry, whether multiple network interfaces of at least one of the two parties in communication access the local PMIPv6 domain; when multiple network interfaces of at least one of the two parties in communication access the local PMIPv6 domain, determining, by the LMA, whether the two parties in communication each have a network interface accessing a same mobile access gateway MAG; when the two parties in communication each have a network interface accessing a same MAG, determining whether all network interfaces transmitting original data of the two parties in communication access the same MAG;
when not all network interfaces transmitting original data of the two parties in communication access the same MAG, determining, by the LMA, whether an original data MAG of any of the two parties in communication is connected to any network interface of the other party communicating with the any of the two parties in communication, wherein the original data MAG is a MAG accessed by a network interface transmitting original data;
if not, sending, by the LMA, a route optimization indication to the original data MAG and/or a target MAG, wherein the route optimization indication indicates the original data MAG and/or the target MAG to perform route optimization on a packet transmission path, and the target MAG is the MAG accessed by both parties in communication;
if so, sending, by the LMA, the shared MAG a route optimization indication indicating the shared MAG to perform route optimization on the packet transmission path, wherein the shared MAG is, of respective original data MAGs of the parties in communication, the MAG connected to both parties in communication.

2. The method according to claim 1, wherein the determining, by the LMA, whether the two parties in communication each have a network interface accessing a same MAG comprises:
acquiring, by the LMA, a Care-of Address in the binding cache entry of each of the two parties in communication;
determining, by the LMA, whether the Care-of Addresses of the two parties in communication are the same;
when the Care-of Addresses of the two parties in communication are the same, determining that the two parties in communication each have a network interface accessing a same MAG; otherwise when the Care-of Addresses of the two parties in communication are not the same, determining that the two parties in communication have no network interface accessing a same MAG.

3. The method according to claim 1, further comprising: after the determining, by the LMA, whether the two parties in communication each have a network interface accessing a same MAG,
when the two parties in communication have no network interface accessing a same MAG, executing, by the LMA, a local route optimization solution A21.

4. The method according to claim 1, further comprising: after the determining whether all network interfaces transmitting original data of the two parties in communication access the same MAG,
when all network interfaces transmitting original data of the two parties in communication access the same MAG, executing, by the LMA, a local route optimization solution A11.

5. The method according to claim 1, wherein the LMA sends the route optimization indication to the target MAG and the original data MAG, and the method further comprises:
forwarding, by the target MAG, a packet of a network interface to the network interfaces connected to the target MAG;
updating, by the original data MAG, a route, and forwarding the original data to the target MAG through a tunnel.

6. The method according to claim 1, wherein the LMA sends the original data MAG the route optimization indication comprising an IP address of the target MAG, and the method further comprises:
sending, by the original data MAG according to the IP address of the target MAG, the target MAG the route optimization indication;
forwarding, by the target MAG, a packet of a network interface to the network interfaces connected to the target MAG;
updating, by the original data MAG, a route, and forwarding the original data to the target MAG through a tunnel.

7. The method according to claim 1, wherein the LMA sends the route optimization indication to the original data MAG and the method further comprises:
updating, by the original data MAG, a route, and forwarding the original data to the target MAG through a tunnel.

8. The method according to claim 1, wherein the LMA sends the shared MAG the route optimization indication, and the method further comprises:
forwarding, by the shared MAG, packets of the parties in communication to the network interfaces of the parties in communication connected to the shared MAG.

9. The method according to any of claims 1-8, wherein the two parties in communication access the local PMIPv6 domain through a Wireless Local Area Network WLAN and a 3rd Generation Partnership Project 3GPP.

10. The method according to any of claims 1-8, further comprising: implementing, by a mobile terminal, route optimization through a logic interface mode or a weak host model.

11. A route optimization apparatus (LMA) **characterized in that** the apparatus comprises:
a scene detecting module comprising:
an address acquiring entity configured for: acquiring any packet forwarded by the apparatus (LMA) and acquiring, according to the any packet, a source IP address and a destination IP address of the any packet;
a first access determining entity configured for: determining, according to the source IP address and the destination IP address, whether both parties in communication of the any packet access a local ProxyMobilelPv6 PMIPv6 domain;
an information acquiring entity configured for: when both parties in communication of the any packet access the local PMIPv6 domain, acquiring, according to the source IP address and the destination IP address, binding cache information of the two parties in communication, wherein the binding cache information comprises a binding cache entry;
a second access determining entity configured for: determining, according to a number of the binding cache entry, whether multiple network interfaces of at least one of the two parties in communication access the local PMIPv6 domain;
a processing entity configured for: when multiple network interfaces of at least one of the two parties in communication access the local PMIPv6 domain, determining whether the two parties in communication each have a network interface accessing a same mobile access gateway MAG; when the two parties in communication each have a network interface accessing a same MAG, determining whether all network interfaces transmitting original data of the two parties in communication access the same MAG;
a determining module configured for: when not all network interfaces transmitting original data of the two parties in communication access the same MAG, determining whether an original data MAG of any of the two parties in communication is connected to any network interface of the other party communicating with the any of the two parties in communication, wherein the original data MAG is a MAG accessed by a network interface transmitting original data;
a first route optimization module configured for: when the determining module gives a determining result of 'no', sending a route optimization indication to the original data MAG and/or a target MAG, wherein the route optimization indication indicates the original data MAG and/or the target MAG to perform route optimization on a packet transmission path, and the target MAG is the MAG accessed by both parties in communication;
a second route optimization module configured for: when the determining module gives a determining result of 'yes', sending the shared MAG a route optimization indication indicating the shared MAG to perform route optimization on the packet transmission path, wherein the shared MAG is, of respective original data MAGs of the parties in communication, the MAG connected to both parties in communication.

12. The apparatus according to claim 11, wherein the first route optimization module comprises:
a first route optimization entity configured for: sending the target MAG and the original data MAG the route optimization indication, for indicating the target MAG to forward a packet of a network interface to the network interfaces connected to the target MAG, and indicating the original data MAG to update a route and forward the original data to the target MAG through a tunnel.

13. The apparatus according to claim 11, wherein the first route optimization module comprises:
a second route optimization entity configured for: sending the original data MAG the route optimization indication comprising an IP address of the target MAG, wherein the route optimization indication indicates the original data MAG to update a route and forward the original data to the target MAG through a tunnel; indicates the original data MAG to send the target MAG the route optimization indication according to the IP address of the target MAG; and indicates the target MAG to forward a packet of a network interface to the network interfaces connected to the target MAG.

14. The apparatus according to claim 11, wherein the first route optimization module comprises:
a third route optimization entity configured for: sending the original data MAG the route optimization indication indicating the original data MAG to update a route and forward the original data to the target MAG through a tunnel.

15. The apparatus according to claim 11, wherein the second route optimization module comprises:
a fourth route optimization entity configured for: sending the shared MAG the route optimization indication indicating the shared MAG to forward packets of the parties in communication to the network interfaces of the parties in communication connected to the shared MAG.

16. A non-transitory computer-readable storage medium, storing computer-executable instructions to perform all steps of the method according to any of claims 1 to 10, when executed on a computer.

## Patentansprüche

1. Routenoptimierungsverfahren, **dadurch gekennzeichnet, dass** das Verfahren Folgendes umfasst:
Erfassen eine Pakets durch einen Local Mobility Anchor (LMA), das durch den LMA übermittelt wird, und Erfassen einer Herkunfts-IP-Adresse und einer Ziel-IP-Adresse jedes Pakets entsprechend dem Paket,
Bestimmen, ob beide miteinander kommunizierende Parteien des einen Pakets auf eine lokale ProxyMobileIPv6-PMIPv6-Domain zugreifen, durch den LMA gemäß der Herkunfts-IP-Adresse und der Ziel-IP-Adresse; wenn beide miteinander kommunizierende Parteien auf die lokale PMIPv6-Domain zugreifen, Erfassen einer Bindungszwischenspeicher-Information der zwei miteinander kommunizierenden Parteien entsprechend der Herkunfts-IP-Adresse und der Ziel-IP-Adresse durch den LMA, wobei die Bindungszwischenspeicher-Information einen Bindungszwischenspeicher-Eintrag umfasst,
Bestimmen, ob mehrere Netzwerk-Schnittstellen von mindestens einer der zwei miteinander kommunizierenden Parteien auf die lokale PMIPv6-Domain zugreifen, durch den LMA gemäß einer Nummer des Bindungszwischenspeicher-Eintrags; wenn mehrere Netzwerk-Schnittstellen von mindestens einer der zwei miteinander kommunizierenden Parteien auf die lokale PMIPv6-Domain zugreifen, Bestimmen durch den LMA, ob die zwei miteinander kommunizierenden Parteien jeweils eine auf das gleiche mobile Zugriffs-Gateway (MAG) zugreifende Netzwerk-Schnittstelle aufweisen; wenn die zwei miteinander kommunizierenden Parteien jeweils eine auf das gleiche MAG zugreifende Netzwerk-Schnittstelle aufweisen, Bestimmen, ob alle Netzwerk-Schnittstellen, die Originaldaten der zwei miteinander kommunizierenden Parteien übertragen, auf das gleiche MAG zugreifen;
wenn nicht alle Netzwerk-Schnittstellen, die Originaldaten der zwei miteinander kommunizierenden Parteien übertragen, auf das gleiche MAG zugreifen, Bestimmen, ob ein Originaldaten-MAG einer der zwei miteinander kommunizierenden Parteien mit einer Netzwerk-Schnittstelle der anderen Partei verbunden ist, die mit der einen der zwei miteinander kommunizierenden Parteien kommuniziert, wobei das Originaldaten-MAG ein MAG ist, auf das durch eine Netzwerk-Schnittstelle zugegriffen wird, die Originaldaten überträgt;
wenn nicht, Senden eines Routenoptimierungszeichens an das Originaldaten-MAG und/oder ein Ziel-MAG, durch den LMA, wobei das Routenoptimierungszeichen dem Originaldaten-MAG und/oder dem Ziel-MAG anzeigt, dass an einem Paketübertragungsweg eine Routenoptimierung auszuführen ist, und das Ziel-MAG das MAG ist, auf das von beiden miteinander kommunizierenden Parteien zugegriffen wird,
wenn ja, Senden eines Routenoptimierungszeichens an das gemeinsam genutzte MAG, welches dem gemeinsam genutzten MAG anzeigt, dass an dem Paketübertragungsweg eine Routenoptimierung auszuführen ist, wobei das gemeinsam genutzte MAG das MAG der entsprechenden Originaldaten-MAGs der miteinander kommunizierenden Parteien ist, das mit beiden miteinander kommunizierenden Parteien verbunden ist.

2. Verfahren nach Anspruch 1, wobei das Bestimmen durch den LMA, ob die zwei miteinander kommunizierenden Parteien jeweils eine auf das gleiche MAG zugreifende Netzwerk-Schnittstelle aufweisen, Folgendes umfasst:
Erfassen einer Zustelladresse im Bindungszwischenspeicher-Eintrag jeder der zwei miteinander kommunizierenden Parteien durch den LMA;
Bestimmen, ob die Zustelladresse der zwei miteinander kommunizierenden Parteien gleich ist, durch den LMA;
wenn die Zustelladresse der zwei miteinander kommunizierenden Parteien gleich ist, Bestimmen, dass die zwei miteinander kommunizierenden Parteien jeweils eine auf das gleiche MAG zugreifende Netzwerk-Schnittstelle aufweisen; andernfalls - wenn die Zustelladressen der zwei miteinander kommunizierenden Parteien nicht gleich sind - Bestimmen, dass die zwei miteinander kommunizierenden Parteien keine auf das gleiche MAG zugreifende Netzwerk-Schnittstelle aufweisen.

3. Verfahren nach Anspruch 1, ferner Folgendes umfassend: nach dem Bestimmen durch die LMA, ob die zwei miteinander kommunizierenden Parteien jeweils eine auf das gleiche MAG zugreifende Netzwerk-Schnittstelle aufweisen,
Ausführen einer lokalen Routenoptimierungslösung A21 durch den LMA, wenn die zwei miteinander kommunizierenden Parteien keine auf das gleiche MAG zugreifende Netzwerk-Schnittstelle aufweisen.

4. Verfahren nach Anspruch 1, ferner Folgendes umfassend: nach dem Bestimmen, ob alle Netzwerk-Schnittstellen, die Originaldaten der zwei miteinander kommunizierenden Parteien übertragen, auf das gleiche MAG zugreifen,
Ausführen einer lokalen Routenoptimierungslösung A11 durch den LMA, wenn alle Netzwerk-Schnittstellen, die Originaldaten der zwei miteinander kommunizierenden Parteien übertragen, auf das gleiche MAG zugreifen.

5. Verfahren nach Anspruch 1, wobei der LMA das Routenoptimierungszeichen an das Ziel-MAG und das Originaldaten-MAG sendet und das Verfahren ferner Folgendes umfasst:
Übermitteln eines Pakets von einer Netzwerk-Schnittstelle an die Netzwerk-Schnittstellen, die mit dem Ziel-MAG verbunden sind, durch das Ziel-MAG;
Aktualisieren einer Route durch das Originaldaten-MAG und Übermitteln der Originaldaten an das Ziel-MAG durch einen Tunnel.

6. Verfahren nach Anspruch 1, wobei der LMA dem Originaldaten-MAG das Routenoptimierungszeichen sendet, das eine IP-Adresse des Ziel-MAG umfasst, und das Verfahren ferner Folgendes umfasst:
Senden des Routenoptimierungszeichens an das Ziel-MAG durch das Originaldaten-MAG entsprechend der IP-Adresse des Ziel-MAG;
Übermitteln eines Pakets von einer Netzwerk-Schnittstelle an die Netzwerk-Schnittstellen, die mit dem Ziel-MAG verbunden sind, durch das Ziel-MAG;
Aktualisieren einer Route durch das Originaldaten-MAG und Übermitteln der Originaldaten an das Ziel-MAG durch einen Tunnel.

7. Verfahren nach Anspruch 1, wobei der LMA das Routenoptimierungszeichen an das Originaldaten-MAG sendet und das Verfahren ferner Folgendes umfasst:
Aktualisieren einer Route durch das Originaldaten-MAG und Übermitteln der Originaldaten an das Ziel-MAG durch einen Tunnel.

8. Verfahren nach Anspruch 1, wobei der LMA dem gemeinsam genutzten MAG das Routenoptimierungszeichen sendet und das Verfahren ferner Folgendes umfasst:
Übermitteln von Paketen der miteinander kommunizierenden Parteien an die Netzwerk-Schnittstellen der miteinander kommunizierenden Parteien, die mit dem gemeinsam genutzten MAG verbunden sind, durch das gemeinsam genutzte MAG.

9. Verfahren nach einem der Ansprüche 1 bis 8, wobei die zwei miteinander kommunizierenden Parteien durch ein WLAN (drahtloses lokales Netzwerk) und ein 3GPP (3.-Generation-Partnerschaftsprojekt) auf die lokale PMIPv6-Domain zugreifen.

10. Verfahren nach einem der Ansprüche 1 bis 8, ferner Folgendes umfassend: Ausführen einer Routenoptimierung durch einen Logikschnittstellen-Modus oder ein Weak-Host-Model durch ein mobiles Endgerät.

11. Routenoptimierungsvorrichtung (LMA), **dadurch gekennzeichnet, dass** die Vorrichtung Folgendes umfasst:
ein Vorgangserkennungsmodul, Folgendes umfassend:
eine Adressenerfassungseinheit, die für Folgendes konfiguriert ist: Erfassen eines Pakets, das durch die Vorrichtung (LMA) übermittelt wird und Erfassen einer Herkunfts-IP-Adresse und einer Ziel-IP-Adresse des einen Pakets gemäß dem Paket;
eine erste Zugriffsbestimmungseinheit, die für Folgendes konfiguriert ist: Bestimmen, ob beide miteinander kommunizierenden Parteien des einen Pakets auf eine ProxyMobilelPv6-PMIPv6-Domain zugreifen, gemäß der Herkunfts-IP-Adresse und der Ziel-IP-Adresse,
eine Informationserfassungseinheit, die für Folgendes konfiguriert ist: Erfassen von Bindungszwischenspeicher-Informationen der zwei miteinander kommunizierenden Parteien gemäß der Herkunfts-IP-Adresse und der Ziel-IP-Adresse, wenn beide miteinander kommunizierenden Parteien des einen Pakets auf die lokale PMIPv6-Domain zugreifen, wobei die Bindungszwischenspeicher-Information einen Bindungszwischenspeicher-Eintrag umfasst;
eine zweite Zugriffsbestimmungseinheit, die für Folgendes konfiguriert ist: Bestimmen, gemäß einer Nummer des Bindungszwischenspeicher-Eintrags, ob mehrere Netzwerk-Schnittstellen mindestens einer der zwei miteinander kommunizierenden Parteien auf die lokale PMIPv6-Domain zugreifen;
eine Verarbeitungseinheit, die für Folgendes konfiguriert ist: Bestimmen, ob die zwei miteinander kommunizierenden Parteien jeweils eine auf das gleiche mobile Zugriffs-Gateway (MAG) zugreifende Netzwerk-Schnittstelle aufweisen wenn mehrere Netzwerk-Schnittstellen mindestens einer der zwei miteinander kommunizierenden Parteien auf die lokale PMIPv6-Domain zugreifen; Bestimmen, ob alle Netzwerk-Schnittstellen, die Originaldaten der zwei miteinander kommunizierenden Parteien übertragen, auf das gleiche MAG zugreifen wenn die zwei miteinander kommunizierenden Parteien jeweils eine auf das gleiche MAG zugreifende Netzwerk-Schnittstelle aufweisen;
ein Bestimmungsmodul, das für Folgendes konfiguriert ist: Bestimmen, ob ein Originaldaten-MAG einer der zwei miteinander kommunizierenden Parteien mit einer Netzwerk-Schnittstelle der anderen Partei verbunden ist, die mit der einen der zwei miteinander kommunizierenden Parteien kommuniziert, wenn nicht alle Netzwerk-Schnittstellen, die Originaldaten der zwei miteinander kommunizierenden Parteien übertragen, auf das gleiche MAG zugreifen, wobei das Originaldaten-MAG ein MAG ist, auf das durch eine Netzwerk-Schnittstelle zugegriffen wird, die Originaldaten überträgt;
ein erstes Routenoptimierungsmodul, das für Folgendes konfiguriert ist: Senden eines Routenoptimierungszeichens an das Originaldaten-MAG und/oder ein Ziel-MAG, wenn das Bestimmungsmodul ein "Nein" als Bestimmungsergebnis ausgibt, wobei das Routenoptimierungszeichen das Originaldaten-MAG und/oder das Ziel-MAG anzeigt, um an einem Paketübertragungsweg eine Routenoptimierung auszuführen, und das Ziel-MAG das MAG ist, auf das beide miteinander kommunizierenden Parteien zugreifen;
ein zweites Routenoptimierungsmodul, das für Folgendes konfiguriert ist: Senden eines Routenoptimierungszeichens an das gemeinsam genutzte MAG, das dem gemeinsam genutzten MAG anzeigt, dass am Paketübertragungsweg eine Routenoptimierung auszuführen ist, wenn das Bestimmungsmodul ein "Ja" als Bestimmungsergebnis ausgibt, wobei das gemeinsam genutzte MAG das MAG der entsprechenden Originaldaten-MAGs der miteinander kommunizierenden Parteien ist, das mit beiden miteinander kommunizierenden Parteien verbunden ist.

12. Vorrichtung nach Anspruch 11, wobei das erste Routenoptimierungsmodul Folgendes umfasst:
eine erste Routenoptimierungseinheit, die für Folgendes konfiguriert ist: Senden des Routenoptimierungszeichens an das Ziel-MAG und das Originaldaten-MAG, um dem Ziel-MAG anzuzeigen, dass ein Paket von einer Netzwerk-Schnittstelle an die Netzwerk-Schnittstellen zu übermitteln ist, die mit dem Ziel-MAG verbunden sind, und dem Originaldaten-MAG anzuzeigen, dass eine Route zu aktualisieren und die Originaldaten durch einen Tunnel an das Ziel-MAG zu senden sind.

13. Vorrichtung nach Anspruch 11, wobei das erste Routenoptimierungsmodul Folgendes umfasst:
eine zweite Routenoptimierungseinheit, die für Folgendes konfiguriert ist: Senden des Routenoptimierungszeichens, das eine IP-Adresse des Ziel-MAG umfasst, an das Originaldaten-MAG, wobei das Routenoptimierungszeichen dem Originaldaten-MAG anzeigt, dass eine Route aktualisiert und die Originaldaten durch einen Tunnel an das Ziel-MAG zu übermitteln sind; dem Originaldaten-MAG anzeigt, dass dem Ziel-MAG das Routenoptimierungszeichen gemäß der IP-Adresse des Ziel-MAG zu senden ist, und dem Ziel-MAG anzeigt, dass ein Paket von einer Netzwerk-Schnittstelle an Netzwerk-Schnittstellen zu übermitteln ist, die mit dem Ziel-MAG verbunden sind.

14. Vorrichtung nach Anspruch 11, wobei das erste Routenoptimierungsmodul Folgendes umfasst:
eine dritte Routenoptimierungseinheit, die für Folgendes konfiguriert ist: Senden des Routenoptimierungszeichen an das Originaldaten-MAG, welches dem Originaldaten-MAG anzeigt, dass eine Route zu aktualisieren und die Originaldaten durch einen Tunnel an das Ziel-MAG zu übermitteln sind.

15. Vorrichtung nach Anspruch 11, wobei das zweite Routenoptimierungsmodul Folgendes umfasst:
eine vierte Routenoptimierungseinheit, die für Folgendes konfiguriert ist: Senden des Routenoptimierungszeichens an das gemeinsam genutzte MAG, welches dem gemeinsam genutzten MAG anzeigt, dass Pakete von miteinander kommunizierenden Parteien an die Netzwerk-Schnittstellen der miteinander kommunizierenden Parteien, die mit dem gemeinsam genutzten MAG verbunden sind, zu übermitteln sind.

16. Nicht flüchtiges, computerlesbares Speichermedium, das von einem Computer ausführbare Befehle speichert, um alle Schritte des Verfahrens nach einem der Ansprüche 1 bis 10 auszuführen, wenn die Befehle auf einem Computer ausgeführt werden.

## Revendications

1. Procédé d'optimisation de route, **caractérisé en ce que** le procédé comprend les étapes ci-dessous consistant à :
acquérir, par le biais d'un point d'ancrage de mobilité, LMA, local, un quelconque paquet acheminé par le point d'ancrage LMA, et acquérir, selon ledit un quelconque paquet, une adresse IP de source et une adresse IP de destination dudit un quelconque paquet ;
déterminer, par le biais du point d'ancrage LMA, selon l'adresse IP de source et l'adresse IP de destination, si les deux parties en cours de communication dudit un quelconque paquet accèdent à un domaine « Proxy Mobile IPv6 », PMIPv6, local ; lorsque les deux parties en cours de communication dudit un quelconque paquet accèdent au domaine PMIPv6 local, acquérir, par le biais du point d'ancrage LMA, selon l'adresse IP de source et l'adresse IP de destination, des informations d'antémémoire d'association des deux parties en cours de communication, dans lequel les informations d'antémémoire d'association comportent une entrée d'antémémoire d'association ;
déterminer, par le biais du point d'ancrage LMA, selon un numéro de l'entrée d'antémémoire d'association, si de multiples interfaces de réseau d'au moins l'une des deux parties en cours de communication accèdent au domaine PMIPv6 local ; lorsque de multiples interfaces de réseau d'au moins l'une des deux parties en cours de communication accèdent au domaine PMIPv6 local, déterminer, par le biais du point d'ancrage LMA, si les deux parties en cours de communication présentent chacune une interface de réseau accédant à une même passerelle d'accès mobile, MAG ; lorsque les deux parties en cours de communication présentent chacune une interface de réseau accédant à une même passerelle MAG, déterminer si toutes les interfaces de réseau transmettant des données initiales des deux parties en cours de communication accèdent à la même passerelle MAG ;
lorsque les interfaces de réseau transmettant des données initiales des deux parties en cours de communication n'accèdent pas toutes à la même passerelle MAG, déterminer, par le biais du point d'ancrage LMA, si une passerelle MAG de données initiales d'une quelconque des deux parties en cours de communication est connectée à une quelconque interface de réseau de l'autre partie communiquant avec l'une quelconque des deux parties en cours de communication, dans lequel la passerelle MAG de données initiales est une passerelle MAG à laquelle accède une interface de réseau transmettant des données initiales ;
dans la négative, envoyer, par le biais du point d'ancrage LMA, une indication d'optimisation de route à la passerelle MAG de données initiales et/ou à une passerelle MAG cible, dans lequel l'indication d'optimisation de route indique, à la passerelle MAG de données initiales et/ou à la passerelle MAG cible, de mettre en oeuvre une optimisation de route sur un chemin de transmission de paquets, et la passerelle MAG cible correspond à la passerelle MAG à laquelle accèdent les deux parties en cours de communication ;
dans l'affirmative, envoyer, par le biais du point d'ancrage LMA, à la passerelle MAG partagée, une indication d'optimisation de route indiquant, à la passerelle MAG partagée, de mettre en oeuvre une optimisation de route sur le chemin de transmission de paquets, dans lequel la passerelle MAG partagée est, parmi des passerelles MAG de données initiales respectives des parties en cours de communication, la passerelle MAG connectée aux deux parties en cours de communication.

2. Procédé selon la revendication 1, dans lequel l'étape consistant à déterminer, par le biais du point d'ancrage LMA, si les deux parties en cours de communication présentent chacune une interface de réseau accédant à une même passerelle MAG, comprend les étapes ci-dessous consistant à :
acquérir, par le biais du point d'ancrage LMA, une adresse d'entretien dans l'entrée d'antémémoire d'association de chacune des deux parties en cours de communication ;
déterminer, par le biais du point d'ancrage LMA, si les adresses d'entretien des deux parties en cours de communication sont identiques ;
lorsque les adresses d'entretien des deux parties en cours de communication sont identiques, déterminer que les deux parties en cours de communication présentent chacune une interface de réseau accédant à une même passerelle MAG ; sinon, lorsque les adresses d'entretien des deux parties en cours de communication ne sont pas identiques, déterminer que les deux parties en cours de communication ne présentent aucune interface de réseau accédant à une même passerelle MAG.

3. Procédé selon la revendication 1, comprenant en outre l'étape ci-dessous consistant à : suite à l'étape consistant à déterminer, par le biais du point d'ancrage LMA, si les deux parties en cours de communication présentent chacune une interface de réseau accédant à une même passerelle MAG,
lorsque les deux parties en cours de communication ne présentent aucune interface de réseau accédant à une même passerelle MAG, exécuter, par le biais du point d'ancrage LMA, une solution d'optimisation de route locale « A21 ».

4. Procédé selon la revendication 1, comprenant en outre l'étape ci-dessous consistant à : suite à l'étape consistant à déterminer si toutes les interfaces de réseau transmettant des données initiales des deux parties en cours de communication accèdent à la même passerelle MAG,
lorsque toutes les interfaces de réseau transmettant des données initiales des deux parties en cours de communication accèdent à la même passerelle MAG, exécuter, par le biais du point d'ancrage LMA, une solution d'optimisation de route locale « A11 ».

5. Procédé selon la revendication 1, dans lequel le point d'ancrage LMA envoie l'indication d'optimisation de route à la passerelle MAG cible et à la passerelle MAG de données initiales, et le procédé comprend en outre les étapes ci-dessous consistant à :
acheminer, par le biais de la passerelle MAG cible, un paquet d'une interface de réseau vers les interfaces de réseau connectées à la passerelle MAG cible ;
mettre à jour, par le biais de la passerelle MAG de données initiales, une route, et acheminer les données initiales vers la passerelle MAG cible à travers un tunnel.

6. Procédé selon la revendication 1, dans lequel le point d'ancrage LMA envoie, à la passerelle MAG de données initiales, l'indication d'optimisation de route comprenant une adresse IP de la passerelle MAG cible, et le procédé comprend en outre les étapes ci-dessous consistant à :
envoyer, par le biais de la passerelle MAG de données initiales, selon l'adresse IP de la passerelle MAG cible, à la passerelle MAG cible, l'indication d'optimisation de route ;
acheminer, par le biais de la passerelle MAG cible, un paquet d'une interface de réseau vers les interfaces de réseau connectées à la passerelle MAG cible ;
mettre à jour, par le biais de la passerelle MAG de données initiales, une route, et acheminer les données initiales vers la passerelle MAG cible, à travers un tunnel.

7. Procédé selon la revendication 1, dans lequel le point d'ancrage LMA envoie l'indication d'optimisation de route à la passerelle MAG de données initiales, et le procédé comprend en outre l'étape ci-dessous consistant à :
mettre à jour, par le biais de la passerelle MAG de données initiales, une route, et acheminer les données initiales vers la passerelle MAG cible, à travers un tunnel.

8. Procédé selon la revendication 1, dans lequel le point d'ancrage LMA envoie, à la passerelle MAG partagée, l'indication d'optimisation de route, et le procédé comprend en outre l'étape ci-dessous consistant à :
acheminer, par le biais de la passerelle MAG partagée, des paquets des parties en cours de communication, vers les interfaces de réseau des parties en cours de communication connectées à la passerelle MAG partagée.

9. Procédé selon l'une quelconque des revendications 1 à 8, dans lequel les deux parties en cours de communication accèdent au domaine PMIPv6 local à travers un réseau local sans fil, WLAN, et une norme de projet de partenariat de 3^{e} génération, 3GPP.

10. Procédé selon l'une quelconque des revendications 1 à 8, comprenant en outre l'étape ci-après consistant à : mettre en oeuvre, par le biais d'un terminal mobile, une optimisation de route à travers un mode d'interface logique ou un modèle d'hôte faible.

11. Appareil d'optimisation de route (LMA), **caractérisé en ce que** l'appareil comporte :
un module de détection de scène comportant :
une entité d'acquisition d'adresses configurée de manière à : acquérir un quelconque paquet acheminé par l'appareil (LMA), et acquérir, selon ledit un quelconque paquet, une adresse IP de source et une adresse IP de destination dudit un quelconque paquet ;
une première entité de détermination d'accès configurée de manière à : déterminer, selon l'adresse IP de source et l'adresse IP de destination, si les deux parties en cours de communication dudit un quelconque paquet accèdent à un domaine « Proxy Mobile IPv6 », PMIPv6, local ;
une entité d'acquisition d'informations configurée de manière à : lorsque les deux parties en cours de communication dudit un quelconque paquet accèdent au domaine PMIPv6 local, acquérir, selon l'adresse IP de source et l'adresse IP de destination, des informations d'antémémoire d'association des deux parties en cours de communication, dans lequel les informations d'antémémoire d'association comportent une entrée d'antémémoire d'association ;
une seconde entité de détermination d'accès configurée de manière à : déterminer, selon un numéro de l'entrée d'antémémoire d'association, si de multiples interfaces de réseau d'au moins l'une des deux parties en cours de communication accèdent au domaine PMIPv6 local ;
une entité de traitement configurée de manière à : lorsque de multiples interfaces de réseau d'au moins l'une des deux parties en cours de communication accèdent au domaine PMIPv6 local, déterminer si les deux parties en cours de communication présentent chacune une interface de réseau accédant à une même passerelle d'accès mobile, MAG ; lorsque les deux parties en cours de communication présentent chacune une interface de réseau accédant à une même passerelle MAG, déterminer si toutes les interfaces de réseau transmettant des données initiales des deux parties en cours de communication accèdent à la même passerelle MAG ;
un module de détermination configuré de manière à : lorsque les interfaces de réseau transmettant des données initiales des deux parties en cours de communication n'accèdent pas toutes à la même passerelle MAG, déterminer si une passerelle MAG de données initiales d'une quelconque des deux parties en cours de communication est connectée à une quelconque interface de réseau de l'autre partie communiquant avec l'une quelconque des deux parties en cours de communication, dans lequel la passerelle MAG de données initiales est une passerelle MAG à laquelle accède une interface de réseau transmettant des données initiales ;
un premier module d'optimisation de route configuré de manière à : lorsque le résultat de détermination du module de détermination est « non », envoyer une indication d'optimisation de route à la passerelle MAG de données initiales et/ou à une passerelle MAG cible, dans lequel l'indication d'optimisation de route indique, à la passerelle MAG de données initiales et/ou à la passerelle MAG cible, de mettre en oeuvre une optimisation de route sur un chemin de transmission de paquets, et la passerelle MAG cible correspond à la passerelle MAG à laquelle accèdent les deux parties en cours de communication ;
un second module d'optimisation de route configuré de manière à : lorsque le résultat de détermination du module de détermination est « oui », envoyer, à la passerelle MAG partagée, une indication d'optimisation de route indiquant, à la passerelle MAG partagée, de mettre en oeuvre une optimisation de route sur le chemin de transmission de paquets, dans lequel la passerelle MAG partagée est, parmi des passerelles MAG de données initiales respectives des parties en cours de communication, la passerelle MAG connectée aux deux parties en cours de communication.

12. Appareil selon la revendication 11, dans lequel le premier module d'optimisation de route comporte :
une première entité d'optimisation de route configurée de manière à : envoyer, à la passerelle MAG cible et à la passerelle MAG de données initiales, l'indication d'optimisation de route, en vue d'indiquer à la passerelle MAG cible d'acheminer un paquet d'une interface de réseau vers les interfaces de réseau connectées à la passerelle MAG cible, et d'indiquer, à la passerelle MAG de données initiales, de mettre à jour une route, et d'acheminer les données initiales à la passerelle MAG cible, à travers un tunnel.

13. Appareil selon la revendication 11, dans lequel le premier module d'optimisation de route comporte :
une deuxième entité d'optimisation de route configurée de manière à : envoyer, à la passerelle MAG de données initiales, l'indication d'optimisation de route comprenant une adresse IP de la passerelle MAG cible, dans lequel l'indication d'optimisation de route indique, à la passerelle MAG de données initiales, de mettre à jour une route et d'acheminer les données initiales vers la passerelle MAG cible, à travers un tunnel ; l'indication indique, à la passerelle MAG de données initiales, d'envoyer, à la passerelle MAG cible, l'indication d'optimisation de route selon l'adresse IP de la passerelle MAG cible ; et l'indication indique, à la passerelle MAG cible, d'acheminer un paquet d'une interface de réseau vers les interfaces de réseau connectées à la passerelle MAG cible.

14. Appareil selon la revendication 11, dans lequel le premier module d'optimisation de route comporte :
une troisième entité d'optimisation de route configurée de manière à : envoyer, à la passerelle MAG de données initiales, l'indication d'optimisation de route indiquant à la passerelle MAG de données initiales de mettre à jour une route et d'acheminer les données initiales vers la passerelle MAG cible, à travers un tunnel.

15. Appareil selon la revendication 11, dans lequel le second module d'optimisation de route comporte :
une quatrième entité d'optimisation de route configurée de manière à : envoyer, à la passerelle MAG partagée, l'indication d'optimisation de route indiquant à la passerelle MAG partagée d'acheminer des paquets des parties en cours de communication vers les interfaces de réseau des parties en cours de communication connectées à la passerelle MAG partagée.

16. Support de stockage lisible par ordinateur non transitoire, stockant des instructions exécutables par ordinateur pour mettre en oeuvre toutes les étapes du procédé selon l'une quelconque des revendications 1 à 10, lorsqu'elles sont exécutées sur un ordinateur.
